# EUROPÄISCHE PATENTANMELDUNG

(11) **EP 3 537 237 A1**
(43) Veröffentlichungstag der Anmeldung: **11.09.2019**
(21) Anmeldenummer: 19156654.6
(22) Anmeldetag: 12.02.2019
(51) Int. Cl.: G05B 13/02, G05B 13/04

(54) **SYSTEM ZUR TABAKAUFBEREITUNG FÜR DIE TABAK VERARBEITENDE INDUSTRIE, UND VERFAHREN ZUM BETRIEB EINER VORRICHTUNG**

(30) Priorität: 09.03.2018 DE 102018105504
(71) Anmelder: Hauni Maschinenbau GmbH, 21033 Hamburg (DE)
(72) Erfinder: PIEPER, Martin, 21033 Hamburg (DE)
(74) Vertreter: Müller Verweyen

(57) **Zusammenfassung**

Ein System (10) für die Tabak verarbeitende Industrie umfasst eine Vorrichtung (11) zur Tabakaufbereitung, eine Steuerungseinrichtung (22), die zur Steuerung der Vorrichtung (11) auf der Grundlage einer Mehrzahl in einem Speicher (23) gespeicherter Steuerungsparameter eingerichtet ist, und mindestens einen Sensor (20), der zur Erfassung mindestens einer Messgröße eingerichtet ist; wobei die Vorrichtung (11) dazu eingerichtet ist, Tabakaufbereitung in einer Chargenverarbeitung über eine Mehrzahl von Chargen auszuführen. Die Steuerungseinrichtung (22) ist zur Speicherung von im Betrieb mit dem Sensor (20) gemessenen Messwerten in dem Speicher (23), nach Abschluss der Aufbereitung einer Charge zur Durchführung einer Analyse der mindestens einen Messgröße auf der Grundlage der in dem Speicher (23) gespeicherten Messwerte und zur Neuberechnung mindestens eines geänderten Steuerungsparameters auf der Grundlage der Analyse eingerichtet.

## Beschreibung

Die vorliegende Erfindung betrifft ein System für die Tabak verarbeitende Industrie, umfassend eine Vorrichtung zur Tabakaufbereitung, eine Steuerungseinrichtung, die zur Steuerung der Vorrichtung auf der Grundlage einer Mehrzahl in einem Speicher gespeicherter Steuerungsparameter eingerichtet ist, und mindestens einen Sensor, der zur Erfassung mindestens einer Messgröße eingerichtet ist, wobei die Vorrichtung dazu eingerichtet ist, Tabakaufbereitung in einer Chargenverarbeitung über eine Mehrzahl von Chargen auszuführen. Die Erfindung betrifft des Weiteren ein Verfahren zum Betrieb einer Vorrichtung für die Tabakaufbereitung in der Tabak verarbeitenden Industrie.

Bei der Inbetriebnahme eines Systems zur Tabakaufbereitung muss eine Vielzahl von Steuerparametern festgelegt werden, welche beispielsweise Parameter zur Einstellung der Vorrichtung und/oder einer Anlage zur Tabakaufbereitung und/oder -verarbeitung sein können, um einen effektiven und hochqualitativen Aufbereitungsprozess sicherzustellen. Die festgelegten Steuerungsparameter umfassen beispielsweise Anlageneinstellungen und/oder Rezeptparameter und beruhen entweder typischerweise auf den Erfahrungswerten von Fachpersonal oder müssen in aufwendigen Versuchen vor Ort ermittelt werden. Das Rezept für das Tabakprodukt und die Anlageeinstellung sind bei komplexen technischen Vorrichtungen beziehungsweise Anlagen schwer durch den Benutzer zu optimieren und einzustellen. Die manuelle, intuitive Optimierung der Maschine ist sehr vom Erfahrungsschatz des Bedieners abhängig. Die manuelle Datenextraktion und Analyse erfordert viel Aufwand und Expertise. Durch den Produktwechsel zwischen verschiedenen Chargen (Batches) und Wechsel von Prozessvorgaben, wie zum Beispiel Temperatur, Massenstrom usw., ist das Verhalten der Anlage beziehungsweise des Systems schwer intuitiv vorherzusagen. Zudem sorgt die Drift in dem System und somit in der Vorrichtung für ungünstiges Laufverhalten, wenn die Steuerungsparameter nicht systematisch nachjustiert werden. Die Drift bezeichnet die sich im Laufe des Betriebes des Systems beziehungsweise im Laufe der Zeit ändernde Qualität des Tabakproduktes und wird beispielsweise durch veränderliche Umweltbedingungen oder Ausgangsstoffe hervorgerufen. Das Nachstellen beziehungsweise Nachjustieren der Steuerungsparameter ist aufwendig und kostspielig und in der Regel durch verringerte Prozessqualität mit hohem Ausschuss und ggf. mit Ausfallzeiten der Anlage verbunden. Die herkömmliche Regelung der Steuerungsparameter ist typischerweise träge und kann Umweltfaktoren und andere Faktoren nicht immer hinreichend kompensieren, was zu einem Ausschuss an Tabak beziehungsweise Tabakprodukt führt.

Ein gattungsgemäßes System ist beispielsweise aus der EP 2 537 072 B1 bekannt, welche eine Vorrichtung offenbart, die dazu eingerichtet ist, mindestens einen Versuch auf der Grundlage einer statistischen Versuchsplanung mit einer Mehrzahl von Versuchsdurchläufen unter Variation von ausgewählten Steuerungsparametern durchzuführen, um einen geeigneten Satz an Steuerungsparametern zu finden, mit welchem eine zukünftige Charge verarbeitet wird. Die Vorrichtung führt somit eine kurzfristige Datenerhebung durch, fährt einen Versuchsplan ab und greift somit aktiv in den Betriebsablauf der Anlage ein. Die Durchführung der Versuche kostet Zeit und führt zu einem Ausschuss von Tabak beziehungsweise Tabakprodukten. Die im Versuch gefundenen Parameter werden für eine Charge verwendet und nach Abschluss der Charge müssen ggf. neue Versuche durchgeführt und neue Steuerungsparameter gefunden werden, was zum erneuten möglichen Ausschuss von Tabak beziehungsweise Tabakprodukt führt.

Die der Erfindung zugrundeliegende Aufgabe ist es, ein System und ein Verfahren bereitzustellen, die eine gleichbleibend hohe Tabakbeziehungsweise Tabakproduktqualität erreichen und gleichzeitig eine verbesserte Effizienz und vereinfachte Bedienung gewährleisten.

Die vorliegende Erfindung löst die Aufgabe mit den Merkmalen der unabhängigen Ansprüche.

Erfindungsgemäß wird vorgeschlagen, dass die Steuerungseinrichtung zur Speicherung von im Betrieb mit dem Sensor gemessenen Messwerten in dem Speicher, nach Abschluss der Aufbereitung einer Charge zur Durchführung einer Analyse der mindestens einen Messgröße auf der Grundlage der in dem Speicher gespeicherten Messwerte und zur Neuberechnung mindestens eines geänderten Steuerungsparameters auf der Grundlage der Analyse eingerichtet ist.

Im Gegensatz zu einer herkömmlichen Regelung, bei der die Steuerungseinrichtung dazu eingerichtet ist, auf Grundlage der gemessenen Messwerte direkt und unmittelbar, im Verlauf der Verarbeitung beziehungsweise Aufbereitung einer Charge, auf die Vorrichtung Einfluss zu nehmen, werden gemäß der Erfindung die im Laufe einer Charge gemessenen Messwerte zunächst im Speicher gespeichert, um anschließend erst nach Abschluss der Aufbereitung einer Charge, ausgewertet, verarbeitet, analysiert und/oder weitergeleitet zu werden. Vorzugsweise werden die die Messwerte umfassenden Prozessdaten in einer Datenbank im Speicher strukturiert gespeichert.

Nach Abschluss der Aufbereitung einer Charge und mithin nach der Speicherung der Messwerte in dem Speicher führt die Steuerungseinrichtung eine Analyse durch und wertet aus und/oder verarbeitet die Messwerte. Die Speicherung der Messwerte erlaubt eine Archivierung der Messwerte über einen langen Zeitraum, um die Messwerte beispielsweise auch im Hinblick auf ihre Historie zu analysieren, was einen Schluss auf die Geeignetheit der Steuerungsparameter, insbesondere für eine abgeschlossene Charge, erlaubt. Die Analyse kann weiterhin das durch die Vorrichtung bedingte natürliche Prozessrauschen und/oder die durch einen Bediener oder auf sonstige Art induzierte Variationen, beispielsweise Änderungen der Rezepteingabe und/oder der Umweltbedingungen, dazu verwenden den Trockner zu charakterisieren. Ein potentiell langfristiges Rauschen und Rezeptveränderungen werden ohne Eingriff oder einer Versuchsdurchführung während des Betriebes mitlaufend erfasst und in die Analyse mit einbezogen.

Die Ergebnisse der Analyse werden dann von der Steuerungseinrichtung verwendet, um eine Neuberechnung des mindestens einen Steuerungsparameters durchzuführen, mit dem beispielsweise eine folgende Charge verarbeitet werden kann. Die Analyse erlaubt eine fortlaufende Anpassung der Steuerungsparameter für jede Charge an die Gegebenheiten.

Die Erfindung vermeidet durch eine Erhebung einer die Messwerte umfassende Datenbasis und durch langfristiges Datensammeln die Notwendigkeit zur Durchführung von Versuchen zur Ermittlung der Steuerungsparameter. Die Erfindung nimmt dem Bediener eine aufwändige Datenextraktion und Auswertung sowie Optimierung der Steuerungsparameter ab, verringert den Aufwand des Bedieners oder der Bediener und liefert verbesserte Anlageneinstellungen durch die Analyse und Neuberechnung in regelmäßigen Abständen nach Abschluss einer Charge.

Vorzugsweise ist die Steuerungseinrichtung dazu eingerichtet, vor der Analyse eine statistische Filterung der in der Datenbank gespeicherten Messwerte durchzuführen, um relevante Einflussgrößen identifizieren und nicht relevante Messwerte verwerfen zu können. Die statistische Filterung kann beispielsweise Korrelationen in miteinander verwandten Messgrößen identifizieren. Beispielsweise kann eine Temperatur in der Vorrichtung oder eine Leistung der Vorrichtung, beispielsweise eines Trockners, gemessen und ausgewertet werden. Die Temperatur und die Leistung können einen Zusammenhang aufweisen, welcher bei der statistischen Filterung berücksichtigt werden kann. Beispielsweise kann die statistische Filterung auch sich als Ausreißer äußernde Messfehler identifizieren und ausfiltern.

In einer bevorzugten Ausführungsform wird für die Analyse eine Beschreibung der Vorrichtung als mathematisch-physikalisches Modell mit angepassten Modellparametern verwendet, um die Vorrichtung beispielsweise nach dem Virtual-Twin-Prinzip als virtuelle Vorrichtung simulieren zu können. Die Modellparameter können beispielsweise Vorrichtungskenngrößen und/oder Verfahrenskenngrößen, wie beispielsweise Leistungen und Volumen und/oder Chargenkenngrößen, wie beispielsweise Eingangsfeuchte (Feuchte des Eingangsstoffes), Eingangsmenge, Dichte und Ausgangsfeuchte (Feuchte des Produktes) umfassen. Mit den Modellparametern kann das mathematisch-physikalisches Modell die Vorrichtung beziehungsweise den Chargenprozess vorzugsweise nachbilden, um beispielsweise unter Zuhilfenahme anderer Einflussparameter eine genaue Neuberechnung des mindestens einen Steuerungsparameters zu erlauben. Dem Modell kann beispielsweise ein finites Differenzen Massenbilanzmodell zugrunde liegen, welche die Masse an Trockensubstanz und die Feuchtigkeiten der Eingabe- und/oder Ausgabestoffe berücksichtigt. Der Steuerungsparameter kann beispielsweise aus der Eingangsfeuchte und dem gewünschten Sollwert der Ausgangsfeuchte bestimmt werden.

Bevorzugt ist die Steuerungseinrichtung dazu eingerichtet, die Analyse mittels multipler Regression durchzuführen, um wenigstens einen Regressionsparameter als Ausgabe der Analyse zu ermitteln und damit eine möglichst effektive Neuberechnung des mindestens einen Steuerungsparameters zu ermöglichen. Die Regression kann auf einer linearen und/oder nichtlinearen Regressionsfunktion basieren, welche aus dem mathematisch-physikalisches Modell herleitbar ist. Vorzugsweise werden alle historischen, relevanten Einflussgrößen beziehungsweise in dem Speicher gespeicherten Daten beziehungsweise Messwerte einbezogen, um eine hohe Robustheit gegenüber Ausreißern zu gewährleisten. Bevorzugt wird das Regressionsmodell beziehungsweise die Regressionsfunktion an die Daten angepasst, um den Charakteristika verschiedener Chargen Rechnung zu tragen.

Die Steuerungseinheit ist vorzugsweise dazu eingerichtet, die gespeicherten Messwerte der Analyse verschieden zu gewichten, um den jeweiligen Anforderungen beziehungsweise Bedingungen Rechnung zu tragen und beispielsweise auf die Charge und/oder die Umweltbedingungen Rücksicht nehmen zu können.

Die Gewichtung aller historisch relevanten Messwerte kann insbesondere bedeuten, dass wenigstens ein Cut-Off bestimmt wird, der bestimmte gespeicherte Messwerte, beispielsweise Messwerte vor einem bestimmten Zeitpunkt, oder Messwerte innerhalb oder außerhalb eines Zeitraumes, gezielt unberücksichtigt lässt. Des Weiteren können auch Messwerte gezielt hervorgehoben und/oder andersartig Gewichtet werden.

Vorteilhaft ist die Steuerungseinrichtung dazu eingerichtet, die für die multiple Regression verwendeten Regressionsparameter nach Abschluss der Aufbereitung einer Charge zu speichern, um auf die Regressionsparameter bei wenigstens einer weiteren Analyse zurückgreifen und/oder diese verbessern beziehungsweise der aktuellen Charge anpassen zu können.

Vorzugsweise ist die Steuerungseinrichtung zur Berechnung und Erfassung relevanter die Qualität des Tabakproduktes und/oder den Chargenprozess charakterisierende Qualitätsparameter eingerichtet, um eine möglichst effektive Überwachung der Vorrichtung beziehungsweise des Systems und/oder der Charge zu erlauben und die Qualität des mindestens einen ermittelten Steuerungsparameters beurteilen zu können. Beispielsweise können Qualitätsparameter die Standardabweichung der Endfeuchte des verarbeiteten beziehungsweise aufbereiteten Produkts, der Anfahrschuss beispielsweise in kg und/oder der Ausfahrschuss beispielsweise in kg sein.

Bevorzugt ist der mindestens eine Sensor zur Erfassung mindestens einer Tabakeigenschaft oder einer Umgebungsgröße eingerichtet, um eine möglichst effektive Analyse mit Bezug zu relevanten Einflussgrößen zu ermöglichen. Beispielhaft ist eine Tabakeigenschaft die als Eingangsfeuchte bezeichnete Feuchtigkeit des Ausgabestoffes Tabak und eine Umgebungsgröße ist die relative Luftfeuchte der Umgebung.

In einer bevorzugten Ausführungsform ist die Steuerungseinrichtung zur Berücksichtigung von vorgespeicherten Chargenkenngrößen eingerichtet, um bei der Analyse die eine Charge charakterisierenden Chargenkenngrößen Rücksicht nehmen zu können. Die Chargenkenngrößen können dauerhaft im Speicher gespeichert, durch einen Bediener eingebbar, und/oder durch die Steuerungseinrichtung mittels einer Netzwerkverbindung speicherbar sein. Die Chargenkenngrößen können beispielsweise Eingangsfeuchte, Eingangsmenge, Dichte und Ausgangsfeuchte umfassen.

Vorzugsweise ist die Steuerungseinrichtung dazu eingerichtet, neuberechnete Steuerungsparameter nach Bestätigung durch einen Bediener für zukünftige Chargenaufbereitung, vorteilhaft über ein Bedienterminal, zu verwenden, um eine Kontrolle durch den Bediener und/oder die Information der Bediener und anderer zu ermöglichen. Vorzugsweise kann hier ein aktiver Eingriff in die Steuerungsparameter durch den Bediener erfolgen, in dem der Bediener die neuberechneten Steuerungsparameter ändernd oder akzeptiert.

Bevorzugt ist die Steuerungseinrichtung dazu eingerichtet, die Speicherung der gemessenen Messwerte, und Einbeziehung in die Analyse, über einen Zeitraum von wenigstens einem Tag, vorzugsweise wenigstens eine Woche, weiter vorzugsweise wenigstens einen Monat, besonders bevorzugt wenigstens ein Jahr durchzuführen, um eine möglichst aussagekräftige Analyse der Messwerte in einem bestimmen Zeitfenster durchführen zu können und beispielsweise tageszeitenbedingten und/oder saisonalen Schwankungen der Umgebungsbedingungen Rechnung tragen zu können. Beispielhaft kann somit tageszeit- und/oder saisonal beziehungsweise jahreszeitenbedingten Luftfeuchteänderungen, oder Änderungen anderer Umweltgrößen, Rechnung getragen werden.

Vorteilhaft ist die Steuerungseinrichtung dazu eingerichtet, die Analyse mittels eines Downhill-Suchverfahrens, vorzugsweise eines Downhill-Simplex-Algorithmus, durchzuführen, um eine effektive Analyse zu ermöglichen. Andere Suchverfahren, beispielsweise ein Hillclimbing-Suchverfahren, können jedoch ebenso angewendet werden. Bei einer linearen Analyse kann die Steuerungseinrichtung dazu eingerichtet sein, ein Simplex-Verfahren anzuwenden.

Vorzugsweise ist die Steuerungseinrichtung dazu eingerichtet, die Analyse mit einem selbstlernenden Algorithmus, besonders vorzugsweise einem neuronalen Netzwerk, durchzuführen, um eine effektive und anpassungsfähige Analyse zu erlauben.

Bevorzugt ist die Steuerungseinrichtung zur Berechnung, Erfassung und/oder Eingabe von Rezeptparametern eingerichtet, um anhand der Steuerungsparameter die Aufbereitung einer Charge mit dem gewünschten Rezept zu ermöglichen. Anhand der Rezeptparameter kann die Neuberechnung des wenigstens einen Steuerungsparameters geeignet durchgeführt werden.

In einer bevorzugten Ausführungsform umfasst die Vorrichtung einen Trockner, insbesondere einen Trommeltrockner, und/oder einen Konditionierer, insbesondere einen Trommelkonditionierer, um den Anforderungen der Tabak verarbeitenden Industrie Rechnung zu tragen.

Eine Charge beziehungsweise ein Batch kann im Rahmen dieser Anmeldung beispielsweise ein Tabakballen oder eine sonstige definierte Tabakportion sein.

Die Erfindung wird im Folgenden anhand bevorzugter Ausführungsformen unter Bezugnahme auf die beigefügten Figuren erläutert. Dabei zeigt
- Fign. 1A und 1B: je eine schematische Darstellung einer Vorrichtung für die Tabakaufbereitung;
- Fig. 2: ein Flussdiagramm für ein Verfahren zum Betrieb einer Vorrichtung für die Tabakaufbereitung gemäß einer Ausführungsform der Erfindung;
- Fign. 3 und 4: je eine schematische Darstellung eines Systems für die Tabakaufbereitung gemäß einer Ausführungsform der Erfindung;
- Fign. 5 und 6: je eine schematische Darstellung des Betriebsablaufs eines Systems für die Tabakaufbereitung gemäß einer Ausführungsform der Erfindung;
- Fign. 7 und 8: je eine schematische Darstellung der Einbindung eines Systems der Tabakaufbereitung in ein Netzwerk zur Datenaufbereitung.

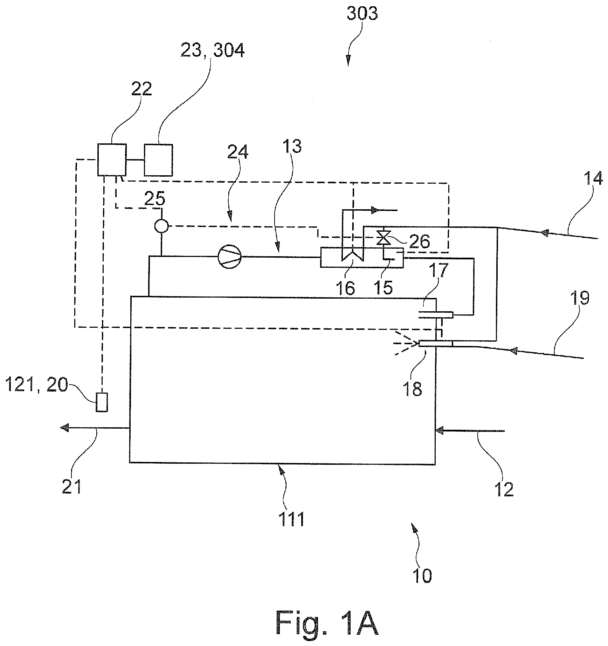

Ein System 10 für die Aufbereitung, Trocknung und/oder Konditionierung eines Tabakprodukts oder Tabaks umfasst, wie in Figur 1A gezeigt, eine Tabakaufbereitungsvorrichtung 11, die beispielsweise als Konditioniervorrichtung 111 ausgeführt ist, insbesondere mit einer rotierenden Löse-Konditioniertrommel, in die das beispielsweise von einem nicht gezeigten Slicer kommende Tabakprodukt 12 eingefördert wird. In der Löse-Konditioniertrommel 111 sind nicht gezeigte Einrichtungen vorgesehen, die bei Rotation der Trommel 111 eine Vereinzelung der verpressten Tabakblätter bewirken.

Das Löseverhalten wird durch eine Erhöhung der Tabaktemperatur günstig beeinflusst. Die Wärmeeinbringung in die Trommel 111 erfolgt durch mit Dampf gesättigte Prozessluft, die in einem Umluftkanal 13 und eine am Tabakeinlauf angeordnete Zuführdüse 17 durch die Trommel 111 geleitet wird. Der Dampf wird von einer Dampfzuführleitung 14 mittels einer Düse 15 in den Umluftkanal 13 eingebracht. Die Prozesslufttemperatur kann mittels eines Regelkreises 24 auf der Grundlage eines mittels eines Signals von einem Temperaturfühler 25 gesteuerten Ventils 26 in der Dampfzuführleitung 14 geregelt sein. Des Weiteren kann ein Dampfwärmetauscher 16 zum Vorheizen der Trommel 111 vorgesehen sein.

Mittels einer ebenfalls am Tabakeinlauf angeordneten Zweistoffdüse 18, die mit der Dampfzuführleitung 14 und einer Wasserzuführleitung 19 verbunden ist und einen Sprühkegel aus vernebeltem Wasser erzeugt, werden die Tabakblätter befeuchtet bzw. konditioniert. Mittels eines an der Auslaufseite der Trommel 111 angeordneten Feuchtesensors 121 kann die Feuchte des aus der Trommel 111 auslaufenden Tabakprodukts 21 bestimmt werden. Die Wasserzuführung durch die Düse 18 kann mittels eines Regelkreises auf der Grundlage eines Signals von dem Sensor 20 geregelt sein. Die Trommel 111 kann zusätzlich eine Einrichtung zum Soßieren des Tabakprodukts, insbesondere eine Düse für den Eintrag von Soße und Dampf, aufweisen.

Das System 10 umfasst eine Steuerungseinrichtung 22, welche als speicherprogrammierte Steuerung ausgeführt sein kann, und einen Speicher 23. Der Speicher 23 kann lokal an die Steuerungseinrichtung 22 angebunden sein, von dieser umfasst sein, sich in einer lokalen Cloud des Bedieners befinden und/oder internetbasiert sein. Die von dem Sensor 20 dynamisch ausgelesenen Daten werden in einer Datenbank im Speicher 23 gespeichert.

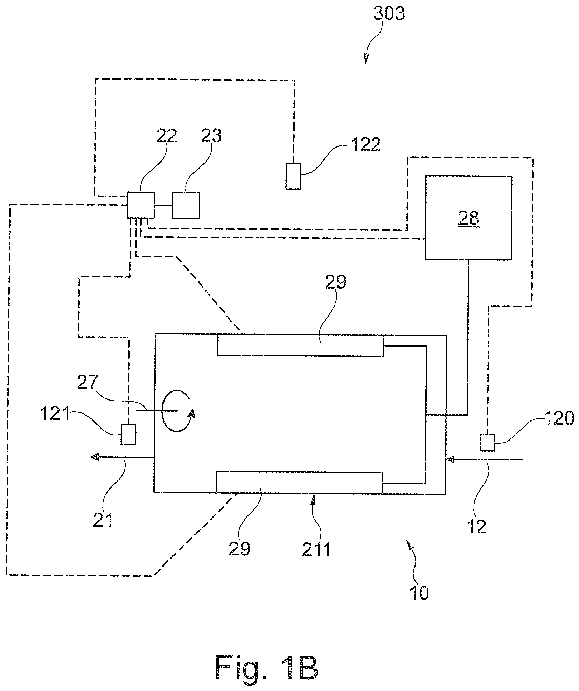

Ein Beispiel für ein System 10 für die Trocknung eines Tabakprodukts oder Tabaks umfasst, wie in Figur 1B gezeigt, eine Tabakaufbereitungsvorrichtung 11, die beispielsweise als Trommeltrockner 211 ausgeführt ist. In den um eine Rotationsachse 27 rotierbaren Trommeltrockner 211 wird das kommende Tabakprodukt 12 eingefördert und durch in dem Trommeltrockner 211 angeordnete Heizmodule 29 beheizt. Mittels eines an der Einlaufseite der Trommel 211 angeordneten Feuchtesensors 120 kann die Feuchte des in die Trommel 211 einlaufenden Tabakprodukts 12 bestimmt werden.

Das System 10 umfasst ebenso wie in Figur 1A eine Steuerungseinrichtung 22, einen Speicher 23 und einen an der Auslaufseite der Trommel 211 angeordneten Feuchtesensor 121 zur Messung der Feuchte des aus der Trommel 211 auslaufenden Tabakprodukts 21.

Mittels einer mit den Heizmodulen 29 über Leitungsrohre verbundenen Wärmeeinrichtung 28 werden die Heizmodule 29 mit Wärme versorgt. Die Wärmeeinrichtung 28 kann mit der Steuerungseinrichtung 22 in Wirkverbindung stehen, um Daten zwischen der Wärmeeinrichtung 28 und der Steuerungseinrichtung 22 austauschen zu können. Die Wärmeeinrichtung 28 und die Heizmodule 29 stellen die zur Trocknung des Tabaks benötigte Wärme beziehungsweise Temperatur bereit. In dem Trommeltrockner 211 können weiter nicht gezeigte Schaufelteile und/oder Kühlmodule vorgesehen sein, um eine effektive Trocknung des Tabaks zu erzielen.

Mittels eines mit der Umgebung des Trommeltrockners 211 in einer Messbeziehung stehenden Umgebungssensors 122 können verschiedene Umgebungsgrößen bestimmt werden. Beispielsweise kann der Umgebungssensor 122 die Temperatur und/oder Luftfeuchte außerhalb des Trommeltrockners 211 messen.

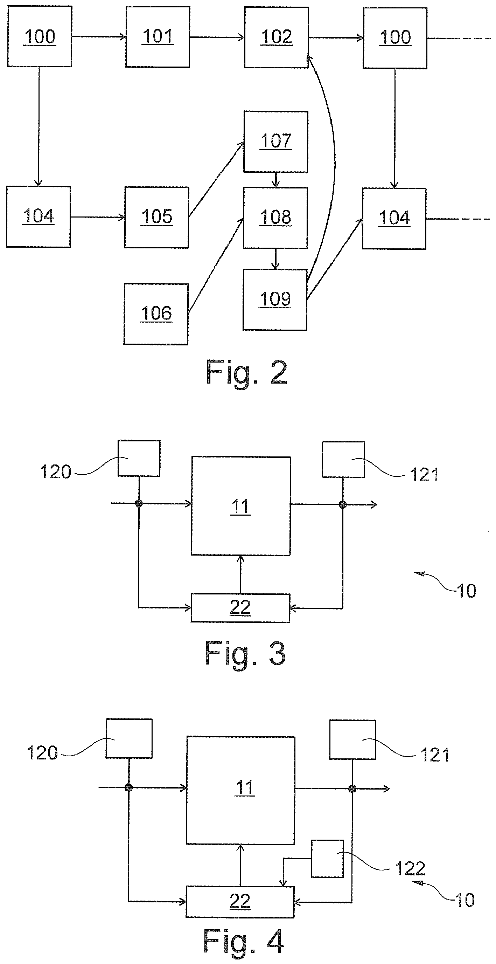

In Figur 2 ist ein Flussdiagramm für ein Verfahren zum Betrieb eines Systems 10 wie in einer der Figuren 1A oder 1B zu sehen. Das in Figur 2 gezeigte Verfahren wird automatisch und wiederholbar von der programmierten bzw. programmierbaren elektronischen Steuerungseinrichtung 22 durchgeführt bzw. von dieser gesteuert. Die Steuerungseinrichtung 22 kann beispielsweise der Anlagensteuerung der Anlage 303 und/oder der Vorrichtung 11 zugeordnet sein.

In der Figur 2 wird zunächst von dem System 10 die Aufbereitung beziehungsweise Verarbeitung 100 einer Charge (Batch) aufgenommen. Die Steuerungsparameter für eine erste Charge können beispielsweise in Form einer Schätzung durch Eingabe oder durch sonstige Festlegung durch Fachpersonal beziehungsweise Bediener 205 vorgegeben werden.

Während der Verarbeitung 100 der Charge archiviert die Steuerungseinrichtung 22 Daten in einer Datenbank 104 in dem Speicher 23. Die Daten umfassen Messgrößen, die mit dem mindestens einen Sensor 20 während des Betriebs gemessen werden, wobei die gemessenen Messgrößen als Messwerte in der Datenbank 104 hinterlegt werden.

Im Falle eines Trommelkonditionierers 111 beziehungsweise eines Trommeltrockners 211 kann die Messung von der Trockenlufttemperatur, der Schaufeltemperatur, der Prozessluftmenge, des Massenstroms von Luft und/oder Tabak beziehungsweise Tabakprodukt, des Dampfmassenstroms, der Eingangsfeuchte, der Ausgangsfeuchte, der relativen Luftfeuchte und/oder der Umgebungslufttemperatur bedeutsam sein, da die zuvor genannten Größen einen unmittelbaren Einfluss auf die Steuerungsparameter, insbesondere auf die Konditionierleistung, Trocknertemperatur und/oder Trocknerleistung haben.

Nach Abschluss 101 der Verarbeitung 100 der Charge werden die Daten aus der Datenbank 104 von der Steuerungseinrichtung 22 vorzugsweise einer Aufbereitung, Filterung und/oder Voruntersuchung 105 (pre-analysis) unterzogen. Die Aufbereitung, Filterung und/oder Voruntersuchung 105 kann beispielsweise Gewichtungen der Messwerte und vorzugsweise gespeicherter Regressionsparameter und/oder Steuerungsparameter anwenden, um gezielt Daten hervorzuheben beziehungsweise zu unterdrücken oder andersartig zu kontrollieren. Die Aufbereitung, Filterung und/oder Voruntersuchung 105 kann statistische Filter anwenden, um Ausreißer und Korrelationen in den Messwerten zu identifizieren, einen Cut-Off verwenden und/oder die Geeignetheit der Messwerte anderweitig feststellen. Ebenso können geeignete Größen und/oder Modelle für eine folgende Analyse 107 ermittelt beziehungsweise berechnet werden.

Anschließend führt die Steuerungseinrichtung 22 auf Grundlage der Datenbank 104 und vorzugsweise der Voruntersuchung 105 die Analyse 107, vorzugsweise eine Regressionsanalyse, der zuvor gespeicherte Daten durch. Die Analyse 107 kann beispielsweise auf einer virtuellen Vorrichtung als virtuelles Abbild der Vorrichtung 11 und/oder auf einer linearen oder nichtlinearen Regression eines Datensatzes wenigstens eines Messwertes, der aus einer Menge von in der Datenbank 104 hinterlegten Messwerten besteht, beruhen.

Die Steuerungseinrichtung 22 ist vorzugsweise dazu eingerichtet, Änderungen 106, welche die aktuelle Umgebungssituation beschreiben und/oder durch den Bediener generierte Änderungen umfassen, in der Neuberechnung der Steuerungsparameter zu berücksichtigen. Die Änderungen 106 können auch Laborwerte wie beispielsweise die Füllkraft und/oder die Schnittweitenverteilung, die den Tabak beziehungsweise das Tabakprodukt charakterisieren umfassen. Beispielsweise kann ein Anwender beziehungsweise Bediener 205 eingeben, dass die relative Luftfeuchte der Umgebung bei 80% oder bei einem anderen Wert liegt und eine Charge mit 6000 kg/h oder einer anderen Menge pro Zeiteinheit Tabak verarbeitet beziehungsweise aufbereitet werden soll.

Eine Neuberechnung 108 beziehungsweise Extrapolation von den wenigstens einen neuen Steuerungsparametern beziehungsweise der Anfahrwerte für vorzugsweise eine zukünftige beziehungsweise folgende Charge beruht auf den Resultaten der Analyse 107, beispielsweise dem wenigstens einen Regressionsparameter, und den Änderungen 106. Ist die Vorrichtung 11 ein Trockner 211, können die Regressionskoeffizienten beispielsweise angeben, dass bei einer Erhöhung der Trocknertemperatur um 1 K die Trocknerleistung beispielhaft um 10 kg/h steigt und/oder eine um 10% erhöhte relative Luftfeuchte in der Umgebung zu einer Verringerung der Trocknerleistung beispielhaft um 50 kg/h führt.

Einer Weiterleitung 109 des wenigstens einen neuberechneten Steuerungsparameters an das System 10 findet statt, welche eine Aktualisierung 102 des wenigstens einen Steuerungsparameters, beispielsweise eines spezifischen Rezeptes und/oder Anlagenparameters, auslöst.

Anschließend beginnt die Verarbeitung 100 einer neuen Charge und aktuelle Messwerte werden in die Datenbank 104 zusammen mit den in der Weiterleitung 109 übermittelten Steuerungsparametern aufgenommen. Die Punkte in Figur 2 deuten eine potentielle Wiederholung des beschriebenen Verfahrens an.

Auf eine zu der Einstellung der Steuerungsparameter analoge Weise können auch Regelparameter von PID-Reglern eingestellt werden, beispielsweise Anfahrrampen, d.h. der Anstieg oder Abfall der Temperatur im Anfahrzustand oder Abfahrzustand der Vorrichtung 11, um im nicht gefüllten Zustand eine Über- oder Untertrocknung zu vermeiden.

In Figuren 3 und 4 ist jeweils ein System 10 umfassend eine Vorrichtung 11, beispielsweise ein Trockner 211, und ein Steuergerät 22 sowie jeweils einen Sensor 120 an einer Materialeingabe der Vorrichtung 11 und einen Sensor 121 an der Materialausgabe der Vorrichtung 11 zu sehen. Die Sensoren 120, 121 können beispielsweise die Eingangsfeuchte und/oder Anfahrschuss beispielsweise in kg beziehungsweise die Ausgangsfeuchte und/oder den Ausfahrschuss beispielsweise in kg messen und die gemessenen Messwerte in einem hier nicht gezeigten Speicher 23 hinterlegen. Das Steuergerät 22 ist dazu eingerichtet, die Leistung der Vorrichtung 11 und/oder die Temperatur in der Vorrichtung 11 mittels wenigstens eines Steuerparameters einzustellen. Die in vorherigen Chargen gewonnen Größen werden dabei in die Ermittlung des wenigstens einen Steuerparameters für kommende Chargen einbezogen.

Der mindestens eine Sensor 20 umfasst in der Ausführungsform gemäß Figur 3 somit die Sensoren 120, 121.

Die in Figur 4 gezeigte Ausführungsform weist einen Sensor 122 auf, welcher dazu eingerichtet ist, eine Umgebungsbedingung zu messen. Beispielsweise kann der Sensor 122 die relative Luftfeuchtigkeit und/oder Umgebungstemperatur messen und an die Steuereinheit 22 weiterleiten. Zusätzlich zu den aus den vorherigen Chargen gewonnen Größen werden in die Ermittlung des wenigstens einen Steuerparameters in diesem Beispiel auch die Umgebungsbedingungen als Einflussparameter einbezogen. Insbesondere die relative Luftfeuchte hat einen Einfluss auf die notwendige Trocknertemperatur bei einer bestimmten Vorgabe von zu erreichender Differenz zwischen Eingangsfeuchte des Tabaks und der Ausgangsfeuchte des verarbeiteten beziehungsweise aufbereiteten Tabaks und/oder Tabakproduktes.

Der mindestens eine Sensor 20 umfasst in den Ausführungsformen gemäß Fig. 1B und Fig. 4 somit die Sensoren 120, 121, 122.

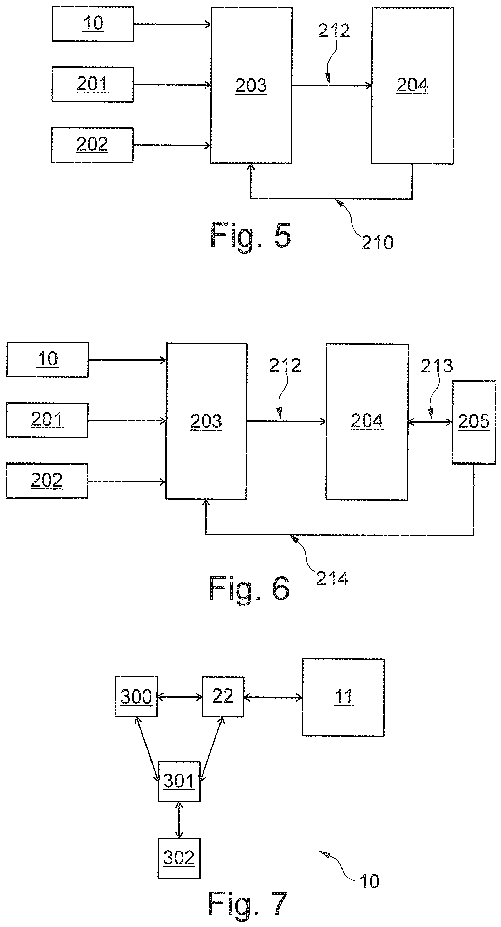

In Figuren 5 und 6 sind schematisch zwei Darstellungen des Betriebsablaufs je einer Ausführungsform eines Systems 10 für die Tabakaufbereitung dargestellt. Eine Charge wird in einem Prozess 203 durch eine hier nicht gezeigte Vorrichtung 11 verarbeitet. Der Prozess 203 ist maßgeblich durch ein Produkt 201 und eine Umgebung 202 bestimmt. Das Produkt 201 umfasst dabei sowohl die Eingabestoffe als auch die Ausgabestoffe. Die Umgebung 202 umfasst sämtliche relevante, die Umgebung 202 in der den Prozess 203 durchgeführt wird charakterisierende Größen, beispielsweise die Temperatur und/oder die relative Luftfeuchte.

In einem automatisierten Schritt 212 werden vorzugsweise nach Abschluss einer Charge, möglicherweise aber auch während einer Charge, die für den Prozess 203 relevanten Daten an ein hier nicht gezeigtes Steuergerät 22 weitergeleitet, welches die Weiterverarbeitung 204 durchführt. Die Weiterverarbeitung 204 umfasst beispielsweise die Analyse 107, die Neuberechnung 108 beziehungsweise die Optimierung und/oder die Anzeige oder die sonstige Übermittlung des wenigstens einen Steuerungsparameters, der Messwerte und/oder anderer Daten.

In der Ausführungsform gemäß Figur 5 findet eine automatische Anpassung 210 in Form einer das Prozess 203 beeinflussenden automatischen Kopplung von der Weiterverarbeitung 204 der Daten mit dem Prozess 203 statt.

In der Ausführungsform gemäß Figur 6 findet eine Kommunikation 213 mit einem Bediener 205 statt, welche beispielsweise die Übermittlung des wenigstens einen Steuerungsparameters an den Bediener 205 in Form eines durch den Bediener 205 zu bestätigenden und/oder zu ändernden Vorschlag umfasst. Zum Start einer neuen Charge wird dem Bediener ein Änderungsvorschlag 214 mit modifizierten Steuerungsparametern vorgelegt. Der akzeptierte Änderungsvorschlag 214 wird sodann in den weiteren Prozess 203 eingebracht. Der Änderungsvorschlag 214 kann direkt durch den Anwender 205 einzugeben und/oder von der Steuereinheit 22 in das Verfahren einbringbar sein. Beispielsweise kann ein Änderungsvorschlag 214 die Angabe umfassen, dass eine Erhöhung der Trocknertemperatur eine bestimmte verbesserte Abtrocknung erzielt und dass bei einer gegebenen Luftfeuchte auf Grund dessen die Temperaturerhöhung einzustellen ist.

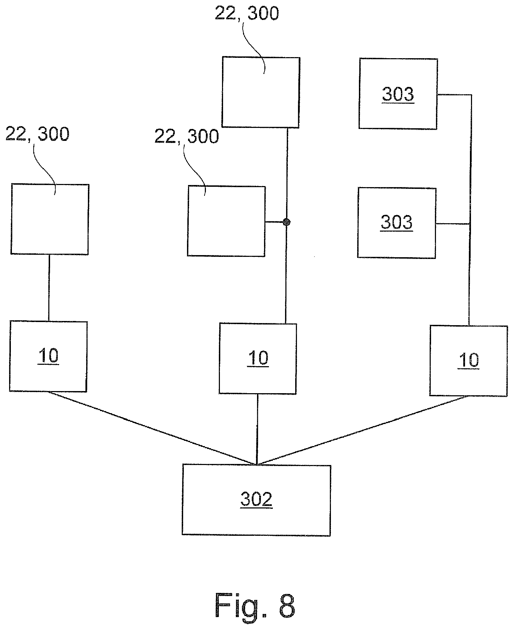

Figuren 7 und 8 zeigen je eine schematische Darstellung der Einbindung eines Systems 10 der Tabakaufbereitung in ein Netzwerk zur Datenaufbereitung und zur Kommunikation. Das eine Vorrichtung 11 und eine Steuerungseinrichtung 22 umfassende System 10 ist zum Datentransfer an ein Netzwerk angeschlossen. Die Vorrichtung 11 wird von der beispielsweise als speicherprogrammierbare Steuerung, SPS, beziehungsweise Programmable Logic Controller, PLC, ausgeführten Steuerungseinrichtung 22 gesteuert.

Die Steuerungseinrichtung 22 ist an eine Mensch-Maschine-Schnittstelle 300, beziehungsweise ein Human Machine Interface, HMI, angeschlossen. Die Mensch-Maschine-Schnittstelle 300 kann der gleichen Baugruppe wie der Steuerungseinrichtung 22 zugeordnet sein oder beispielsweise mittels einer Netzwerkverbindung an einem von der Steuerungseinrichtung 22 entfernten Ort angeordnet sein.

Die Mensch-Maschine-Schnittstelle 300 ist vorzugsweise mittels einer virtual network computing-Software, VNC, mit einer Datenaufbereitungseinrichtung 301 verbunden. Die Datenaufbereitungseinrichtung 301 kann beispielsweise ein Computer sein.

Die Steuerungseinrichtung 22 ist vorzugsweise mittels eines OPC Unified Architecture-Protokolls mit der Datenaufbereitungseinrichtung 301 verbunden. Mittels des Protokolls können mehrere Systeme 10 verbunden werden.

Die Datenaufbereitungseinrichtung 301 ist beispielhaft mit einer Cloud 302 verbunden, die die möglicherweise ressourcenaufwändige Berechnung und die Speicherung der Steuerungsparameter durchführt.

In Figur 8 ist eine Ausführungsform gezeigt, bei dem die Cloud 302 mit einer Mehrzahl von Systemen 10 verbunden ist. Jedes System 10 kann eine oder mehrere Steuerungseinrichtung 22 und Mensch-Maschine-Schnittstellen 300 umfassen, um beispielsweise die Erfassung und/oder Einstellung der Vorrichtung an verschiedenen Orten beispielsweise durch verschiedenes Personal durchführen zu lassen. Das System 10 kann an wenigstens eine weitere Produktionsanlage 303, beispielsweise eine Anlage 303 an einem weiteren Standort, angeschlossen sein und mit dieser Daten austauschen. Jede Produktionsanlage 303 kann wiederum ein System 10 umfassen.

## Patentansprüche

1. System (10) für die Tabak verarbeitende Industrie, umfassend
- eine Vorrichtung (11) zur Tabakaufbereitung,
- eine Steuerungseinrichtung (22), die zur Steuerung der Vorrichtung (11) auf der Grundlage einer Mehrzahl in einem Speicher (23) gespeicherter Steuerungsparameter eingerichtet ist, und
- mindestens einen Sensor (20, 120, 121, 122), der zur Erfassung mindestens einer Messgröße eingerichtet ist; wobei
- die Vorrichtung (11) dazu eingerichtet ist, Tabakaufbereitung in einer Chargenverarbeitung über eine Mehrzahl von Chargen auszuführen,
**dadurch gekennzeichnet, dass**
- die Steuerungseinrichtung (22) zur Speicherung von im Betrieb mit dem Sensor (20, 120, 121, 122) gemessenen Messwerten in dem Speicher (23),
- nach Abschluss der Aufbereitung einer Charge zur Durchführung einer Analyse der mindestens einen Messgröße auf der Grundlage der in dem Speicher (23) gespeicherten Messwerte und
- zur Neuberechnung mindestens eines geänderten Steuerungsparameters auf der Grundlage der Analyse eingerichtet ist.

2. System nach Anspruch 1, **dadurch gekennzeichnet, dass**
- die Steuerungseinrichtung (22) dazu eingerichtet ist, vor der Analyse eine statistische Filterung der in dem Speicher (23) gespeicherten Messwerte durchzuführen.

3. System nach einem der vorangegangenen Ansprüche, **dadurch gekennzeichnet, dass**
- für die Analyse eine Beschreibung der Vorrichtung (11) als mathematisch-physikalisches Modell mit angepassten Modellparametern verwendet wird.

4. System nach einem der vorangegangenen Ansprüche, **dadurch gekennzeichnet, dass**
- die Steuerungseinrichtung (22) dazu eingerichtet ist, die Analyse mittels multipler Regression durchzuführen.

5. System nach Anspruch 4, **dadurch gekennzeichnet, dass**
- die Steuerungseinrichtung (22) dazu eingerichtet ist, die für die multiple Regression verwendeten Regressionsparameter nach Abschluss der Aufbereitung einer Charge zu speichern.

6. System nach einem der vorangegangenen Ansprüche, **dadurch gekennzeichnet, dass**
- die Steuerungseinrichtung (22) zur Berechnung und Erfassung relevanter die Qualität des Tabakproduktes und/oder den Chargenprozess charakterisierende Qualitätsparameter eingerichtet ist.

7. System nach einem der vorangegangenen Ansprüche, **dadurch gekennzeichnet, dass**
- der mindestens eine Sensor (20, 120, 121, 122) zur Erfassung mindestens einer Tabakeigenschaft oder einer Umgebungsgröße eingerichtet ist.

8. System nach einem der vorangehenden Ansprüche, **dadurch gekennzeichnet, dass**
- die Steuerungseinrichtung (22) zur Berücksichtigung von vorgespeicherten Chargenkenngrößen (106) eingerichtet ist.

9. System nach einem der vorangegangenen Ansprüche, **dadurch gekennzeichnet, dass**
- die Steuerungseinrichtung (22) dazu eingerichtet ist, neuberechnete Steuerungsparameter nach Bestätigung durch einen Bediener (205) für zukünftige Chargenaufbereitung, vorteilhaft über ein Bedienterminal, zu verwenden.

10. System nach einem der vorangegangenen Ansprüche, **dadurch gekennzeichnet, dass**
- die Steuerungseinrichtung (22) dazu eingerichtet ist, die Speicherung der gemessenen Messwerte, und Einbeziehung in die Analyse, über einen Zeitraum von wenigstens einem Tag durchzuführen.

11. System nach einem der vorangegangenen Ansprüche, **dadurch gekennzeichnet, dass**
- die Steuerungseinrichtung (22) dazu eingerichtet ist, die Analyse mittels eines Downhill-Suchverfahrens, vorzugsweise eines Downhill-Simplex-Algorithmus, durchzuführen.

12. System nach einem der vorangegangenen Ansprüche, **dadurch gekennzeichnet, dass**
- die Steuerungseinrichtung (22) dazu eingerichtet ist, die Analyse mit einem selbstlernenden Algorithmus, vorzugsweise einem neuronalen Netzwerk, durchzuführen.

13. System nach einem der vorangegangenen Ansprüche, **dadurch gekennzeichnet, dass**
- die Steuerungseinrichtung (22) zur Berechnung, Erfassung und/oder Eingabe von Rezeptparametern eingerichtet ist.

14. System nach einem der vorangegangenen Ansprüche, **dadurch gekennzeichnet, dass**
- die Vorrichtung (11) einen Trockner (211), insbesondere einen Trommeltrockner, und/oder einen Konditionierer (111), insbesondere einen Trommelkonditionierer umfasst.

15. Verfahren zum Betrieb einer Vorrichtung (11) zur Tabakaufbereitung in der Tabak verarbeitenden Industrie, umfassend
- die Steuerung der Vorrichtung (11) auf der Grundlage einer Mehrzahl von gespeicherten Steuerungsparametern, und
- die Erfassung mindestens einer Messgröße, wobei
- die Tabakaufbereitung in einer Chargenverarbeitung über eine Mehrzahl von Chargen durchgeführt wird,
**dadurch gekennzeichnet, dass**
- im Betrieb gemessene Messwerte gespeichert werden,
- eine Analyse der mindestens einen Messgröße nach Abschluss der Aufbereitung einer Charge auf der Grundlage der gespeicherten Messwerte durchgeführt wird und
- mindestens ein geänderter Steuerungsparameter auf der Grundlage der Analyse neuberechnet wird.
